# EUROPEAN PATENT SPECIFICATION

(11) **EP 4 288 685 B1**
(45) Date of publication and mention of the grant of the patent: **08.04.2026**
(21) Application number: 22750278.8
(22) Date of filing: 02.02.2022
(51) Int. Cl.: F16L 37/14, G06K 19/06, F16L 37/084

(54) **FLUID LINE QUICK CONNECTOR WITH DATA MATRIX**
FLUIDLEITUNGSSCHNELLVERBINDER MIT DATENMATRIX
RACCORD RAPIDE DE CONDUITE DE FLUIDE AVEC MATRICE DE DONNÉES

(30) Priority: 02.02.2021 US 202163144721 P
(43) Date of publication of application: 13.12.2023
(73) Proprietor: Norma U.S. Holding LLC, Auburn Hills, MI 48326 (US)
(72) Inventor: TEASLEY, Lee, Berkley, MI 48072 (US); MOULVI, Zeeshan, Southfield, MI 48033 (US); GEISER, Brandon, Roseville, MI 48066 (US); WEBB, Mark, Richard, Clarkston, MI 48348 (US)
(74) Representative: Patentanwälte Olbricht Buchhold Keulertz
(86) International application number: PCT/US2022/014829
(87) International publication number: WO 2022/169797

(56) References cited:
- EP-A1- 3 943 795
- DE-A1- 102018 219 440
- DE-U1- 202020 103 903
- JP-A- 2010 261 588
- KR-B1- 101 829 496
- KR-B1- 101 966 161
- US-A1- 2009 261 582
- US-A1- 2012 242 080
- US-A1- 2012 242 080
- US-A1- 2020 309 298

## Description

### CROSS-REFERENCE TO RELATED APPLICATION

This application claims the benefit of U.S. Provisional Patent Application No. 63/144,721, with a filing date of February 2, 2021.

### TECHNICAL FIELD

This disclosure relates generally to quick connectors used to join fluid lines together, and to ways of verifying that proper connections have been made with the quick connectors.

### BACKGROUND

Quick connectors are commonly used to join fluid lines together in vehicle applications, or to join a fluid line with a component line. The quick connectors establish a fluid-tight joint. One example is fuel fluid lines in automobiles, and another example is coolant fluid lines in electric or hybrid vehicle automobiles. Still, other examples exist in automotive applications, as well as in non-automotive applications like industrial-manufacturing, aerospace, marine, and agricultural applications, to name a few. For initial assembly and inspection and subsequent service, visual measures are sometimes employed in quick connectors in order to verify that a proper connection has been made. These measures typically call for physical interaction and viewing by an assembler, inspector, and/or servicer to confirm the establishment of the intended connection. Known quick connectors having a data matrix are shown in DE 20 2020 103 903 U1, DE 10 2018 219 440 A1 and EP 3 943 795 A1. Also known is a quick connector with a color coding from US 2012 / 0242080 A1.

### SUMMARY

The present invention is defined in the independent claim 1. Advantageous features of the invention are defined in the dependent claims.

In an embodiment, a fluid line quick connector includes a housing, a primary latch, a secondary latch, and a data matrix. The housing has a main passage and a pass-through. The primary latch is insertable through the pass-through. The secondary latch is locatable near the primary latch. The secondary latch has an open position and a closed position. When the secondary latch is in the open position, the data matrix is partially or more concealed. When the secondary latch is in the closed position, the partial or more concealment is absent.

In another embodiment, a fluid line quick connector may include a housing, a retainer assembly, and one or more data matrices. The housing has a main passage and an exterior surface. The retainer assembly is carried by the housing. The retainer assembly includes a primary latch and a secondary latch. The secondary latch has an open position with respect to the primary latch. The secondary latch has a closed position with respect to the primary latch. The retainer assembly has one or more arms. The arm(s) has a barrier wall. The data matrix(ces) resides at the housing's exterior surface. The data matrix(ces) is partially or more concealed by way of the barrier wall when the secondary latch is in the open position. When the secondary latch is brought to the closed position, the barrier wall moves and the partial or more concealment is removed with the barrier wall's movement.

In yet another embodiment, a fluid line quick connector may include a housing, a retainer assembly, a slide, and a data matrix. The housing has a main passage. The retainer assembly is carried by the housing. The retainer assembly includes a primary latch and a secondary latch. The secondary latch has an open position with respect to the primary latch. The secondary latch has a closed position with respect to the primary latch. The slide has a first position and has a second position. The slide is prompted to move from the first position and to the second position via impingement by the retainer assembly when the secondary latch is brought to the closed position. The data matrix resides on the slide. The data matrix is partially or more concealed when the slide is in the first position. The data matrix is able to be read when the slide is in the second position.

### BRIEF DESCRIPTION OF THE DRAWINGS

Embodiments of the disclosure are described with reference to the appended drawings, in which:
FIG. 1 is a side view of an embodiment of a fluid line quick connector, with a secondary latch depicted in an open position; this embodiment is not according to the invention as defined by the claims;
FIG. 2 is a side view of the quick connector, with the secondary latch depicted in a closed position;
FIG. 3 is a perspective view of the quick connector, with the secondary latch in the open position;
FIG. 4 is a perspective view of the quick connector, with the secondary latch in the closed position;
FIG. 5 is a perspective view of an embodiment of a retainer assembly of the quick connector;
FIG. 6 is another perspective view of the retainer assembly;
FIG. 7 is a perspective view of another embodiment of a fluid line quick connector, with a secondary latch depicted in a closed position; this embodiment is according to the invention as defined by the claims;
FIG. 8 is an exploded view of the quick connector of FIG. 7;
FIG. 9 is a sectional view of the quick connector of FIG. 7, with the secondary latch in the closed position;
FIG. 10 is a perspective view of an embodiment of a retainer assembly of the quick connector of FIG. 7, with the secondary latch in the open position;
FIG. 11 is a sectional view of the retainer assembly of FIG. 10, with the secondary latch in the closed position;
FIG. 12 is a perspective view of another embodiment of a retainer assembly; this embodiment does not fall within the scope of the claims;
FIG. 13 is an enlarged view of an embodiment of a barrier wall of the retainer assembly;
FIG. 14 is a segmented view of an embodiment of a housing; and
FIG. 15 is an enlarged view demonstrating interaction of the barrier wall and housing of FIGS. 13 and 14.

### DETAILED DESCRIPTION

Embodiments of a fluid line quick connector (hereafter, quick connector) with a data matrix are detailed in this description and depicted in the figures. The quick connector and its data matrix enable determination of a proper connection, or lack thereof, via a device that is located remote of an immediate site of securement of the quick connector, and the device need not necessarily make physical contact with the site of securement for the determination. Detection and verification of connection can hence be carried out remotely, and in some cases in addition to other measures of physical and visual verification. By way of its remote verification capabilities, the quick connector is equipped for initial assembly, subsequent quality inspection, and subsequent service techniques that are at least partly automated and robotic. Moreover, the detection and verification capabilities facilitated by the data matrix are repeatable, and can be performed at initial assembly and subsequent disassembly and reassembly. This description presents the quick connector in the context of automotive fluid lines, such as fuel fluid lines or coolant fluid lines, but the quick connector has broader application and is suitable for use in industrial-manufacturing fluid lines, aircraft fluid lines, marine fluid lines, and agricultural fluid lines, as well as others. Furthermore, unless otherwise specified, the terms radially, axially, and circumferentially, and their grammatical variations refer to directions with respect to the generally circular and cylindrical shape of the quick connector and its components as illustrated in the figures.

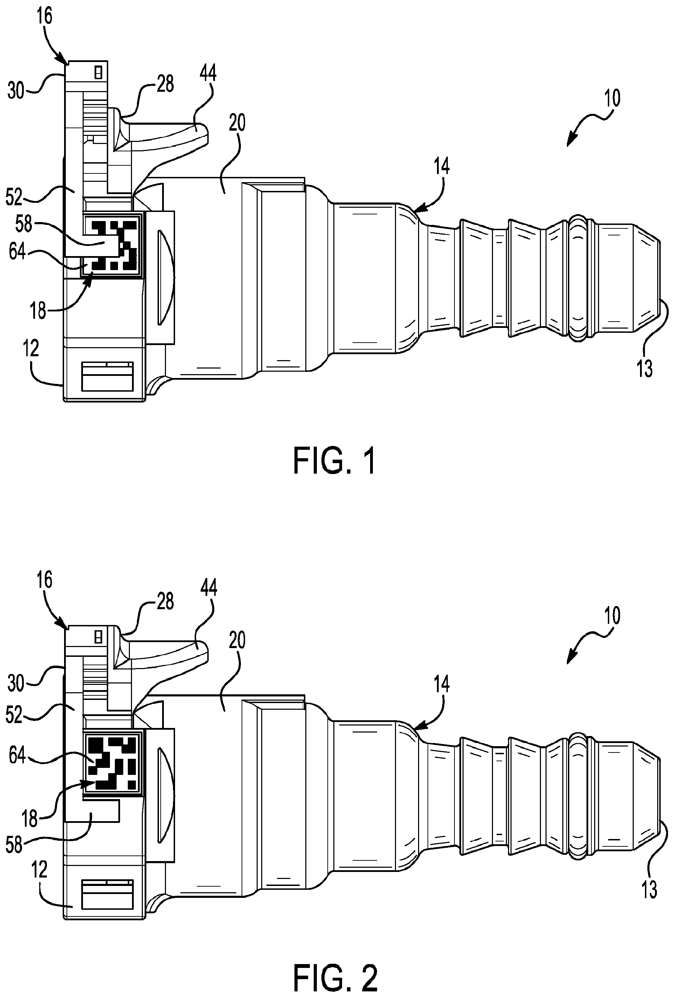

The quick connector can have various designs, constructions, and components in different embodiments, depending in some cases on the application in which the quick connector is installed, on an accompanying spigot, hose, and/or tube, and on the desired attributes of the connection and joint established, among other possible factors. FIGS. 1-6 present a first embodiment of a fluid line quick connector 10. This first embodiment does not fall within the scope of the claims. The quick connector 10 has quick-connect functionality for ready connect and disconnect actions with a spigot, and can connect with a rubber hose or a plastic tube, for example. The spigot is a separate and discrete connecting component that is inserted into a first open end 12 of the quick connector 10. In this sense, the quick connector 10 is a female counterpart and the spigot is a male counterpart. The spigot typically has a flange protruding radially-outboard from its exterior for interaction with the quick connector 10, but could have some other end formation. The flange or end formation are usually spaced axially from a terminal end of the spigot. The spigot could be a part of a larger component of the accompanying automobile. The quick connector 10 has an in-line configuration in the figures, but could have an elbow or L-shaped configuration in other embodiments, or some other configuration.

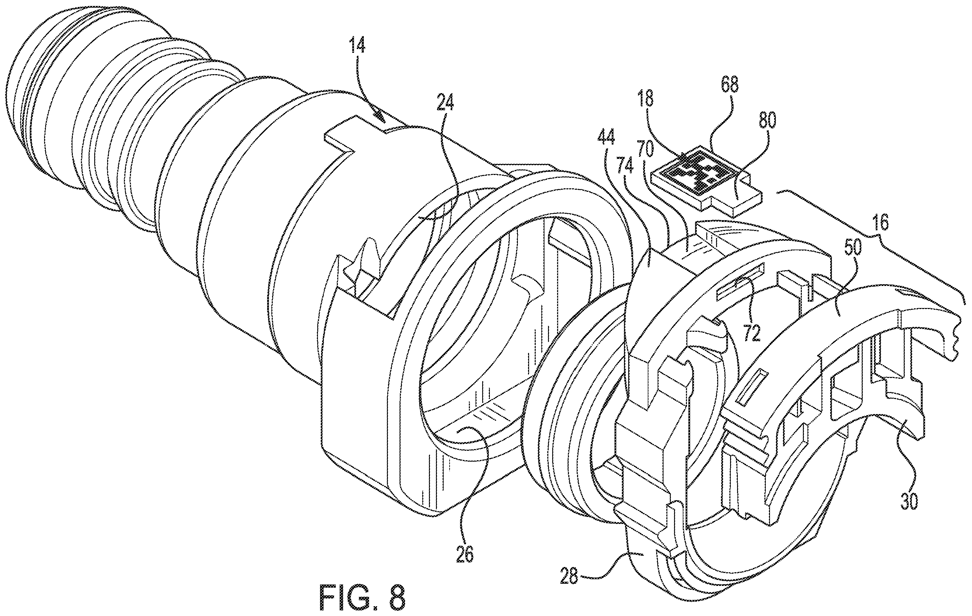

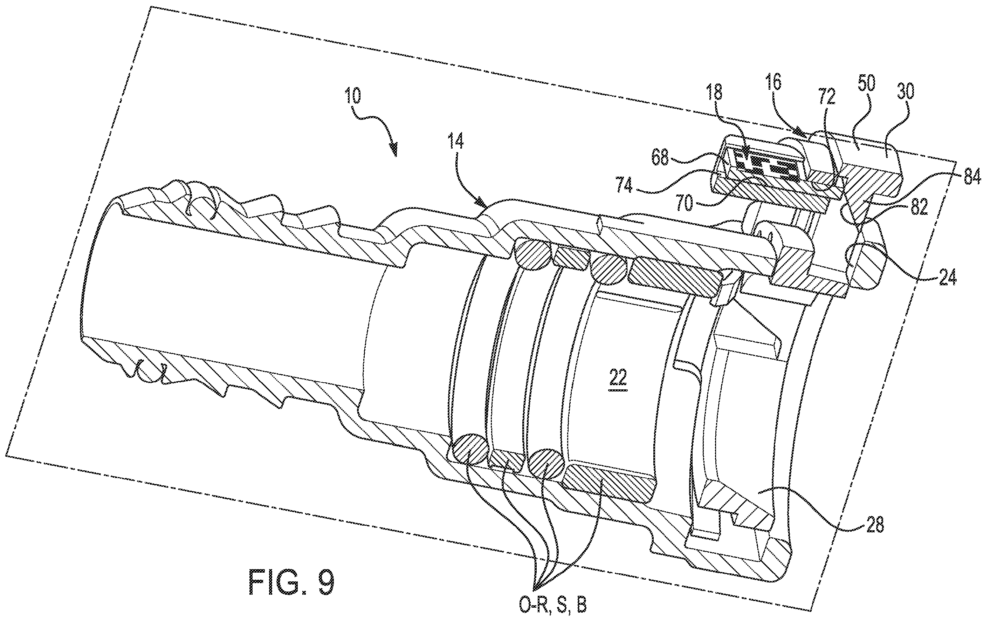

In the first embodiment, the quick connector 10 includes a housing 14, a retainer assembly 16, and a data matrix 18; still, in other embodiments, the quick connector 10 could have more, less, and/or different components. The housing 14 serves as the main body of the quick connector 10 and is typically composed of a plastic material. The housing 14 has an exterior surface 20. A main passage 22 is defined fully through the housing 14 end-to-end for allowing fluid-flow through the quick connector 10 amid use. The main passage 22 spans axially through the housing 14 between the first open end 12 and a second, opposite open end 13. In order to form seals and to facilitate securement between the quick connector 10 and the spigot when they come together, one or more o-rings, spacers, and/or bushings can be situated within the main passage 22 as will be appreciated by skilled artisans, and as shown in the sectional view of FIG. 9 and denoted by O-R, S, B. Further, a pass-through 24 is defined wholly through the housing 14 at one side. The pass-through 24 accommodates installation of the retainer assembly 16 within the housing 14. The retainer assembly 16 is received in the pass-through 26. The pass-through 24 is bounded on four sides by the housing's wall, is located adjacent the first open end 12, and spans radially wholly through the housing 14. Without the retainer assembly 16 inserted therein, the pass-through 24 is open to the main passage 22. Adjacent the pass-through 24, a groove 26 (FIG. 8) resides at an interior of the housing 14 and is defined in the housing's interior wall for accepting insertion of the retainer assembly 16.

The retainer assembly 16 keeps hold of the spigot once the spigot is inserted into the quick connector 10 and once the retainer assembly 16 is closed, and prevents the spigot from exiting the quick connector 10 inadvertently and unintentionally. The retainer assembly 16 also serves to partially or more conceal and obstruct the data matrix 18 from thorough reading when the retainer assembly 16 is open, and serves to reveal the data matrix 18 for suitable and proper reading when the retainer assembly 16 is closed. For assembly with the housing 14, the retainer assembly 16 is carried by the housing 14 and is particularly situated in the pass-through 24. The retainer assembly 16 can have various designs, constructions, and components in different embodiments. In the first embodiment of FIGS. 1-6, the retainer assembly 16 includes a primary latch 28 and a secondary latch 30.

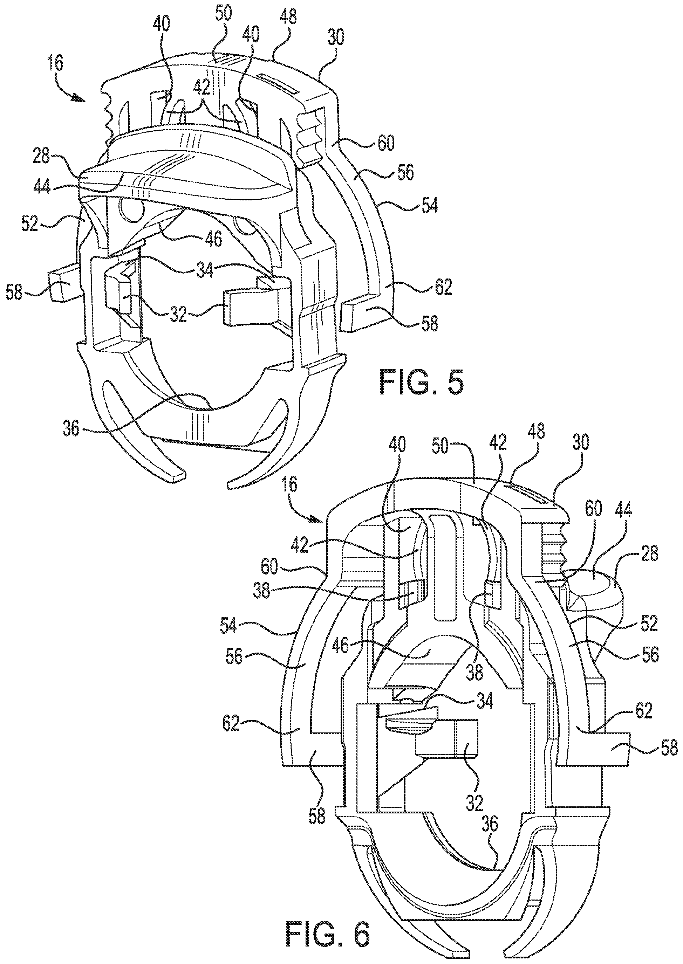

The primary latch 28 is inserted in the pass-through 24. With particular reference now to FIGS. 5 and 6, to engage the spigot's flange or other end formation and secure the spigot in the quick connector 10, the primary latch 28 has a pair of retention prongs 32 extending radially-inboard from each of its side walls. When the spigot is not inserted in the quick connector 10, the retention prongs 32 are suspended in the main passage 22 in the spigot's path of insertion, and a shoulder 34 atop each retention prong 32 acts as a detent to prevent radially-downward movement of the secondary latch 30. The secondary latch 30 cannot close due to the interference caused by the shoulder 34 when the spigot is not inserted in the quick connector 10. Upon insertion of the spigot, the spigot's flange or other end formation impinges the retention prongs 32 and bend the retention prongs 32 backward and radially-outboard. The retention prongs 32 are biased against the spigot's exterior once the flange or end formation passes the retention prongs 32, but do not fully return to their previous suspended position. The retention prongs 32 remain urged against the spigot's exterior. When against the spigot's exterior, the shoulders 34 are displaced radially-outboard and out of the path of radially-downward movement of the secondary latch 30. The interference once caused by the shoulders 34 is now removed and the secondary latch 30 can close. In addition to the retention prongs 32, a retention rim 36 also comes into engagement with the spigot's flange or other end formation. Furthermore, a pair of guides 38 extend axially from the primary latch 28. The guides 38 are received in slits 40 of the secondary latch 30, and have hooked ends that trap the secondary latch 30 against axial separation from the primary latch 28, while still allowing a certain degree of radial movement of the secondary latch 30 relative to the primary latch 28. The slits 40 are established in part by bowed uprights 42 that provide a degree of resistance against free radially-downward and radially-upward movement of the secondary latch 30. Lastly, the primary latch 28 has a tab 44 that is provided at an exterior of the housing 14 for manipulation by a user. The tab 44 can be pressed for assembling the retainer assembly 16 in the housing 14, and can be pulled for disassembly and removal. The tab 44 can be sized for manipulation by a user's hand.

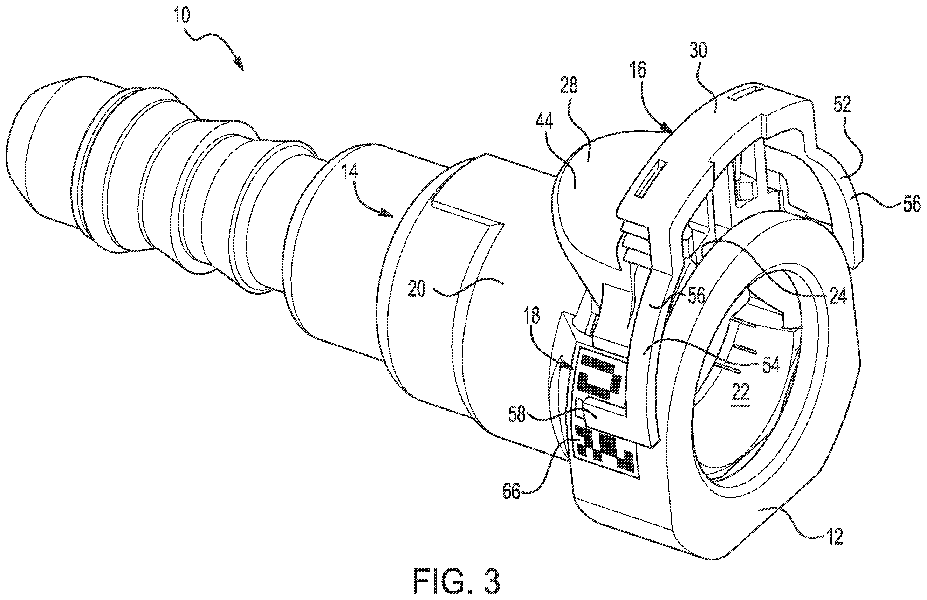

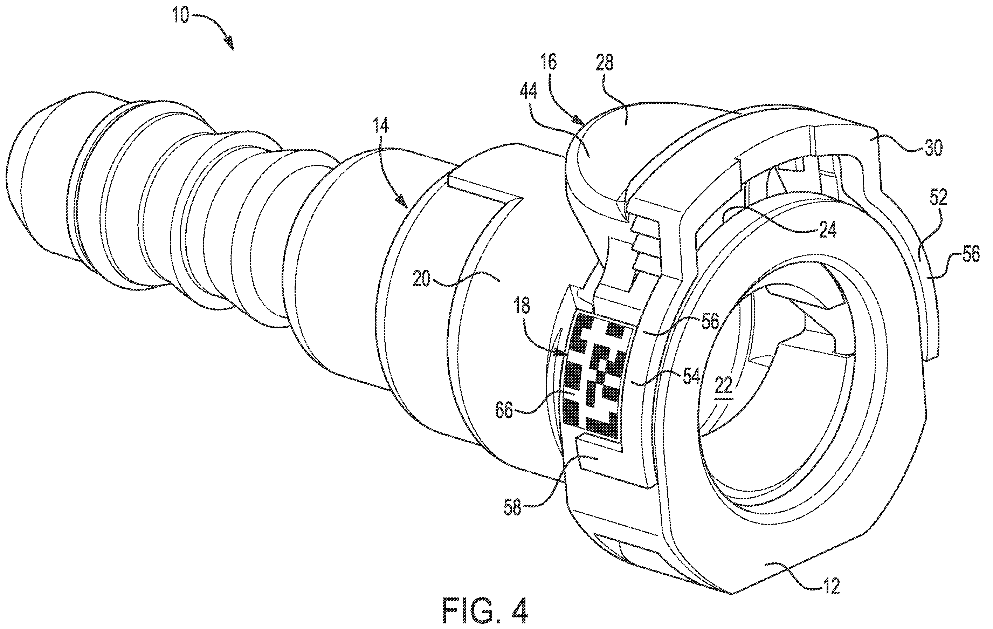

The secondary latch 30 is coupled with the primary latch 28 via the guide-slit interengagement, and is then inserted in the pass-through 24 with the primary latch 28. The secondary latch 30 furnishes physical and visual verification that the spigot is inserted a sufficient depth into the housing's main passage 22. The secondary latch 30 moves between an open position and a closed position. The open position is demonstrated in FIGS. 1 and 3, and the closed position is demonstrated in FIGS. 2 and 4. The open position serves as an indication that connection between the quick connector 10 and spigot is incomplete. The closed position, on the other hand, serves as an indication that connection between the quick connector 10 and spigot is complete. Movement by the secondary latch 30 between the open and closed positions is with respect to the housing 14 and relative to the primary latch 28. The secondary latch 30 is moved radially-downward to the closed position and, conversely, radially-upward to the open position. Its movement is in a direction that is orthogonal and transverse to a direction of insertion of the spigot into the housing's main passage 22. With reference again to FIGS. 5 and 6, to engage the spigot's exterior and flange or other end formation and assist with securing the spigot in the quick connector 10, the secondary latch 30 has a retention wall 46. When the secondary latch 30 is closed, the retention wall 46 makes abutment with the spigot's exterior. The retention wall 46 extends down from a main body 48 of the secondary latch 30. A bridge portion 50 of the main body 48 spans from side-to-side, and presents a push-down feature for the user to press the secondary latch 30 to the closed position.

In the embodiment of the figures, the ability and inability to read and scan the data matrix 18 is carried out in coordination with the closing and opening movements of the secondary latch 30. In the first embodiment, for example, the secondary latch 30 has a first arm 52 and has a second arm 54 that conceal the data matrix 18 in the open position and, conversely, reveal the data matrix 18 in the closed position. The first arm 52 extends from one side of the main body 48 and, particularly, extends from the bridge portion 50, while the second arm 54 extends from an opposite side of the main body 48 and of the bridge portion 50. The first and second arms 52, 54 remain at an exterior of the housing 14 when the retainer assembly 16 is assembled therein and when the retainer assembly 16 is in the closed and open positions, and the first and second arms 52, 54 remain external of the main passage 22 and external of the pass-through 24, as shown in FIGS. 1-4. The first and second arms 52, 54 are unitary extensions of the main body 48 and move downward and upward with the secondary latch 30 relative to a main axis of the main passage 22 when the secondary latch 30 is moved down and up to the closed and open positions.

With particular reference to FIGS. 5 and 6, the first and second arms 52, 54 are similar in design and construction. Each arm 52, 54 has an elongate body 56 and a barrier wall 58. The elongate body 56 spans from a proximal end 60 at the main body 48, to a distal end 62 at the barrier wall 58. The elongate body 56 has a curve in its extent to complement the exterior of the housing 14, and locates the barrier wall 58 at and near the data matrix 18 in assembly and use. The barrier wall 58 constitutes a free and terminal end of the particular arm 52, 54. The barrier wall 58 has a shape and size suitable to physically obstruct and block the data matrix 18 from readability and scan-ability when the secondary latch 30 is open, and then to unobstruct and unblock the data matrix 18 for appropriate reading and scanning when the secondary latch 30 is closed. The barrier wall 58 is rectangular in this embodiment, and depends orthogonally and axially from the elongate body 56. As perhaps demonstrated best by FIG. 1, the barrier wall 58 only partially obstructs and blocks the data matrix 18 in the open position. The partial obstruction has been found to preclude the ability to properly read and scan the data matrix 18. In other embodiments, the barrier wall 58 can possess a different shape and size, and can more fully, or entirely, obstruct and block the data matrix 18. Further, a slight clearance can reside between confronting surfaces of the barrier wall 58 and the data matrix 18.

The data matrix 18 assists in the detection and verification of an intended and proper connection between the quick connector 10 and the spigot, or a lack thereof. Only when the retainer assembly 16 is closed with the secondary latch 30 in its closed position can the data matrix 18 be appropriately read and scanned by a device. Absent that condition, such as when the secondary latch 30 is in its open position, the device is unable to suitably read and scan the data matrix 18. The ability to read the data matrix 18 serves as an indication that the secondary latch 30 is in the closed position, and ultimately that a suitable connection has been made between the quick connector 10 and the spigot. Conversely, the inability to read the data matrix 18 serves as an indication that the secondary latch 30 is in the open position, and ultimately that a suitable connection has not been made between the quick connector 10 and the spigot. Moreover, the detection and verification furnished by the data matrix 18 may be supplemental to other measures of physical and visual verification exhibited by the quick connector 10, depending on the particular embodiment. In the embodiments of the figures, for example, verification of connection is also had by closure of the secondary latch 30. Additional verification via the data matrix 18 may be desired and useful in applications where making the intended connection is of increased criticality. Furthermore, the device reads and scans the data matrix 18 remote of, and distanced from, the quick connector 10, and can do so without physical contact with the quick connector 10. The device can be a data matrix scanner or reader. In a manufacturing setting, for instance, the device can be stationed among an assembly, inspection, and/or installation production line, as well as elsewhere. The device could also be a handheld device.

The data matrix 18 can have various forms in different embodiments. The data matrix 18 can be a two-dimensional machine-readable code consisting of a black and white pattern, for instance. Examples include quick response (QR) codes, barcodes, as well as many others. Depending on its form, the data matrix 18 can encode information and data with letters and/or digits, and could communicate part indicia, location of installation indicia, date of installation indicia, or something else. The data matrix 18 can be marked on labels or other substrates that are then adhered in place on the quick connector 10, or can be marked directly in place on the quick connector 10 or on a component thereof such as by way of printing or laser etching. In the first embodiment, and referring to FIGS. 1-4, the data matrix 18 includes a first data matrix 64 and a second data matrix 66. The first and second data matrices 64, 66 reside at the exterior surface 20 of the housing 14, and are located near the first open end 12. The first data matrix 64 is located on one side of the housing 14 for interaction with the first arm 52, and the second data matrix 66 is located on an opposite side of the housing 14 for interaction with the second arm 54. Amid movement of the first and second arms 52, 54, the first and second data matrices 64, 66 remain static relative thereto. Having a pair of data matrices in this embodiment at different locations on the housing 14 accommodates reading and scanning of at least one of the first or second data matrix 64, 66 among varying orientations of the quick connector 10 in installation when only one may be accessible and the other may be inaccessible. Here, the ability to read or scan just one of the first or second data matrix 64, 66 may alone serve as an indication that the secondary latch 30 is closed. Still, in alternatives to the first embodiment, the secondary latch could have a single arm and a single data matrix could be provided. In a more specific example of the first embodiment, the first and second data matrices 64, 66 are laser etched directly into the exterior surface 20 of the housing 14 at their respective locations. Each data matrix 64, 66, per an example, can have a square shape that is five millimeters by five millimeters (5mm × 5mm); still, other shapes and sizes are possible in other examples.

In use, the barrier wall 58 of the first arm 52 partially obstructs and blocks the first data matrix 64 from full and proper readability and scan-ability when the secondary latch 30 is in the open position (e.g., FIGS. 1 and 3), while the barrier wall 58 of the second arm 54 partially obstructs and blocks the second data matrix 66 from full and proper readability and scan-ability when the secondary latch 30 is in the open position. Conversely, when the secondary latch 30 is brought to the closed position (e.g., FIGS. 2 and 4), the first and second data matrices 64, 66 are fully exposed and revealed for full and proper readability and scan-ability. In the closed position, the first matrix 64 is unobstructed and unblocked, and the second matrix 66 is concurrently unobstructed and unblocked. That is, the barrier wall 58 of the first arm 52 no longer partially obstructs and no longer partially blocks the first data matrix 64, and the barrier wall 58 of the second arm 54 no longer partially obstructs and no longer partially blocks the second data matrix 66.

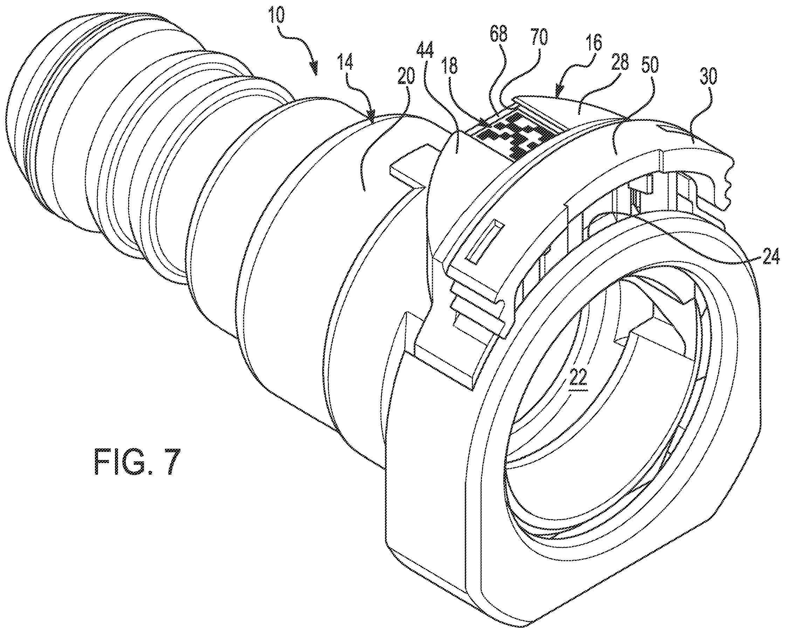

A second embodiment of the fluid line quick connector 10 is presented in FIGS. 7-11. This second embodiment is according to the invention as defined by the claims.

Many components of the second embodiment are similar to those in the first embodiment, and those similarities may not be repeated here in the description of the second embodiment. In FIGS. 7-11, the ability and inability to read and scan the data matrix 18 is carried out in a different manner than previously described. Unlike the first embodiment, this second embodiment of the quick connector 10 includes a slide 68 that carries the data matrix 18. The slide 68 can move amid use, as set forth below, and in turn can move the data matrix 18 carried thereon. To receive insertion of the slide 68, the primary latch 28 has a slot 70 and a through-hole 72. The slot 70 is defined in the tab 44 and spans lengthwise in an axial direction, and has an open end 74 for initially accepting the slide 68. The slot 70 can also have lips 76 on each of its sides. The lips 76 protrude slightly circumferentially toward each other and work to help guide translational sliding movement of the slide 68 amid use, and serve to help keep the slide 68 in its place in the slot 70. The through-hole 72 spans axially through the tab 44, and particularly through a bridge portion 78 of the tab 44. The through-hole 72 is open to the slot 70 at one axial side, and is open to the secondary latch 30 at its opposite axial side. The through-hole 72 and slot 70 openly communicate with each other. The through-hole 72 receives insertion of an appendage 80 of the slide 68. The appendage 80, as perhaps shown best in FIG. 8, is a unitary extension of the slide 68 that has a smaller size compared to a larger main body of the slide 68. The data matrix 18 resides at the slide's main body, and is absent at the appendage 80.

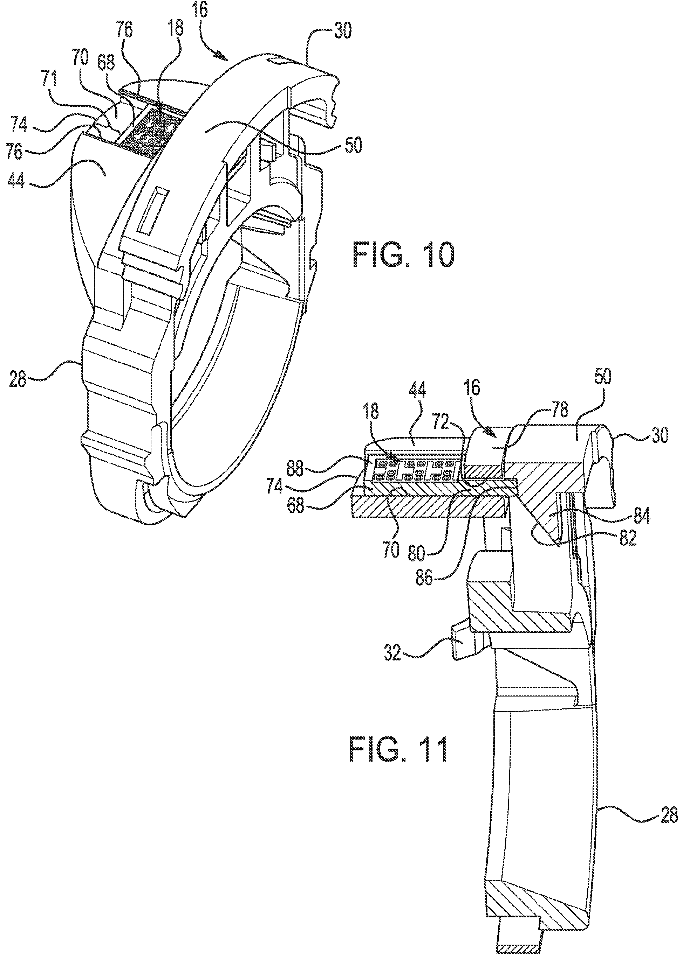

With particular reference to FIG. 11, in order to prompt and actuate the sliding action of the slide 68, the secondary latch 30 of this second embodiment has a ramped surface 82. The ramped surface 82 resides on an extension 84 of the secondary latch 30 and is established by a planar surface that is slanted relative to the radial direction. The extension 84 depends radially-downward from the bridge portion 50. It juts downward at a side-to-side middle section of the bridge portion 50. The extension 84 has a stop surface 86 depending immediately from the ramped surface 82, and depending from an underside of the bridge portion 50. Unlike the slant of the ramped surface 82, the stop surface 86 is directed in-line with the radial direction, and vertically downward from the bridge portion 50 according to the orientation of FIG. 11. The data matrix 18 resides on an upper surface 88 of the slide 68, and can be laser etched directly onto the upper surface 88 according to one example, or can be provided on the upper surface 88 via another technique as described elsewhere in this description. In the assembled state, as illustrated in FIG. 7 for instance, the upper surface 88 and data matrix 18 face vertically upward relative to the housing 14.

In use, the slide 68 is initially set in place in the slot 70 and slid axially forward with the secondary latch 30 in the open position, as demonstrated in FIG. 10. The appendage 80 is inserted in the through-hole 72. The slide 68 is received in the slot 70, and the appendage 80 is received in the through-hole 72. To effect a snap-fit or force-fit between the appendage 80 and the through-hole 72, the appendage 80 can have a barbed end or some other end formation or end enlargement similar in kind. Since the secondary latch 30 and the extension 84 are positioned radially-upward with respect to the appendage 80 in the open position, a spacing between the ramped surface 82 and appendage 80 accommodates axially forward movement of the slide 68. A free or terminal end of the appendage 80 can abut against the ramped surface 82 when the slide 58 is axially forward, per FIG. 10. In this first or withdrawn position of the slide 68, the data matrix 18 is partially obstructed and blocked by the bridge portion 78 from readability and scan-ability. The bridge portion 78 physically masks a lower section of the data matrix 18. Only an upper section of the data matrix 18 may be exposed, as shown in FIG. 10, and a lengthwise extent 71 of the slot 70 is exposed. The partial obstruction, as before, has been found to preclude the ability to read and scan the data matrix 18. In other embodiments, the bridge portion 78 can more fully, or entirely, obstruct and block the data matrix 18. Still, in other embodiments the obstruction can be caused in part or more by a portion of the secondary latch 30 in lieu of, or in addition to, the obstruction caused by the primary latch 28; for example, the bridge portion 50 could have an extended portion that causes the obstruction. When the secondary latch 30 is moved radially-downward toward the closed position, direct surface-to-surface abutment between the ramped surface 82 and the free end of the appendage 80 prompts opposite and axially rearward sliding movement of the slide 68 and the data matrix 18. The ramped surface 82 urges movement of the slide 68. The sliding movement is with respect to the slot 70. Furthermore, the sliding movement is in-line with the axial direction, but orthogonal and transverse to the radially-downward movement of the secondary latch 30. This second or extended position of the slide 68 is demonstrated in FIGS. 7, 9, and 11. Here, the data matrix 18 is unobstructed and unblocked. Full and proper reading and scanning by the device can now occur. The appendage 80 may remain in abutment with the stop surface 86, as shown best in FIG. 11, so that the slide 68 cannot move axially forward from the second position when the secondary latch 30 is in the closed position and so the data matrix 18 remains revealed for reading and scanning.

Movement of the slide 68 and full exposure of the data matrix 18 is caused by radially-downward movement of the secondary latch 30, and in this embodiment is not caused by direct and immediate component-to-component impingement between the slide 68 and the spigot or other male counterpart that enters the quick connector 10. In other words, movement of the slide 68 is not dependent on impingement by a male counterpart upon its entry into the quick connector 10, and rather depends on impingement by the secondary latch 30 when it is moved radially-downward.

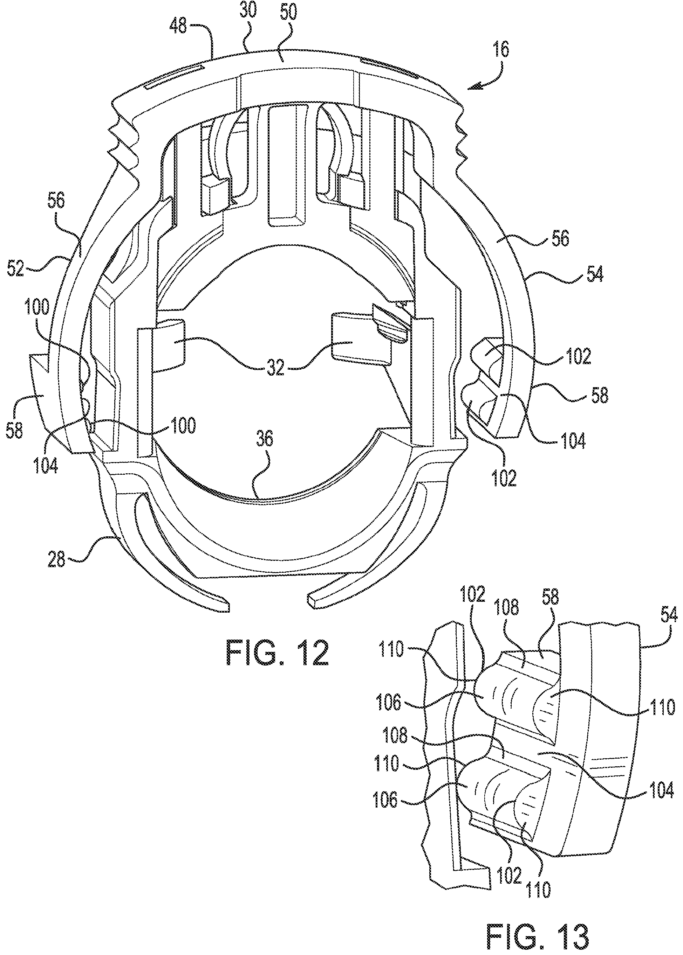

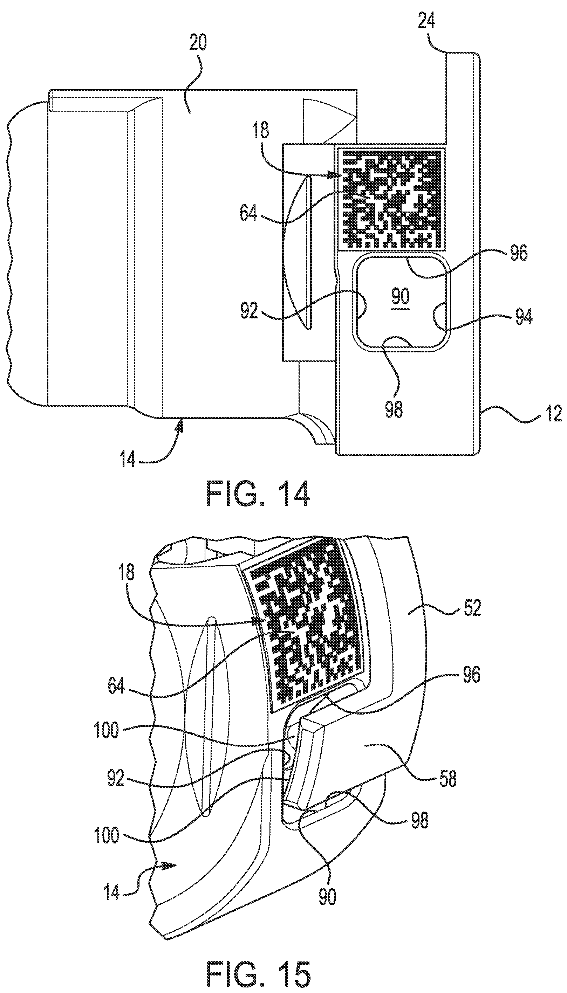

A third embodiment of the fluid line quick connector 10 is presented in FIGS. 12-15. This third embodiment does not fall within the scope of the claims. Many components of the third embodiment are similar to those in the first embodiment, and those similarities may not be repeated here in the description of the third embodiment. In FIGS. 12-15, the ability and inability to read and scan the data matrix 18 is carried out in a somewhat similar manner as the first embodiment. But unlike the first embodiment, in this third embodiment the housing 14 defines openings that interact with protrusions of the secondary latch 30. With reference to FIG. 14, a first opening 90 resides on one side of the housing 14 and a similarly-sized and similarly-shaped second opening (not specifically depicted) resides on an opposite side of the housing 14. The first opening 90 accommodates reception of protrusions of the first arm 52, and the second opening accommodates reception of protrusions of the second arm 54. The first opening 90 and second opening are located near the first open end 12. The first opening 90 neighbors the first data matrix 64 in the circumferential direction and sits below the first data matrix 64, as illustrated in FIG. 14. Likewise, the second opening neighbors the second data matrix 66 in the circumferential direction and sits below the second data matrix 66. The first opening 90 can have a square, rectangular, or other shape, and the second opening can also have a square, rectangular, or other shape. The first and second openings 90 span radially wholly through the housing 14. Taking the first opening 90 in FIG. 14 as an example, the first opening 90 is bounded on four sides by the housing's wall. An axially-forward wall edge 92 bounds one side, an axially-rearward wall edge 94 bounds another side, a radially-upward wall edge 96 bounds another side, and a radially-downward wall edge 98 bounds yet another side. Still, the openings can have other designs, constructions, and arrangements in other embodiments; for example, the openings need not span wholly through the housing 14.

With reference now to FIGS. 12 and 13, in this embodiment the first arm 52 has a pair of first protrusions 100, and the second arm 54 has a pair of second protrusions 102. The first protrusions 100 are received in the first opening 90, and the second protrusions 102 are received in the second opening. The receptions occur when the secondary latch 30 is in the closed position. Depending on the particular embodiment, the receptions can effect one or more of the following: serve as a movement limiter, aid in piloting assembly of the retainer assembly 16 with the housing 14 when the components are initially put together, serve as a detent and aid in maintaining the secondary latch 30 in the closed position, and preclude and prevent inadvertent and unwanted movement of the secondary latch 30 and movement of its first and second arms 52, 54 when the secondary latch 30 is in the closed position. The protrusions can have various designs, constructions, and arrangements in different embodiments. Their precise design, construction, and arrangement may be dictated by - among other possible influences - the associated opening, the associated arm, and/orv the intended function and purpose of the protrusions.

In the embodiment of FIGS. 12 and 13, the first protrusions 100 are located on an underside surface 104 of the first arm 52, and particularly of the barrier wall 58 thereof, and project radially-inwardly therefrom. Likewise, the second protrusions 102 are located on an underside surface 104 of the second arm 54, and particularly of the barrier wall 58 thereof, and project radially-inwardly therefrom. The first protrusions 100 directly confront and can make direct contact with the first data matrix 64 when the barrier wall 58 of the first arm 52 obstructs and blocks the first data matrix 64 in the open position of the secondary latch 30. Similarly, the second protrusions 102 directly confront and can make direct contact with the second data matrix 66 in the secondary latch's open position. In this embodiment, the first and second protrusions 100, 102 exhibit similar designs, constructions, and arrangements relative to each other. FIG. 13 shows an enlarged view of the second protrusions 102 as an example, and the descriptions here of the second protrusions 102 apply to the first protrusions 100 as well. Individual protrusions of the pair 102 have the same shape and size, and each resemble a halved cylinder. The halved cylinders are separated from each other and spaced apart.

At a radially-directed side, each of the second protrusions 102 has a rounded exterior surface 106 with curved transitions 108 spanning from the underside surface 104. The rounded exterior surfaces 106 and curved transitions 108 provide a detent function of the first and second protrusions 100, 102, and resist radially-upward movement of the first and second arms 52, 54 when the first and second protrusions 100, 102 are received in the first and second openings 90 and when the secondary latch 30 is in the closed position. The detent function and resistance are a consequence of surface-to-surface engaging interference between the rounded exterior surfaces 106 and curved transitions 108 and the radially-upward wall edges 96 of the first and second openings 90. The resistance can be overcome via exertion of a radially-upward force on the secondary latch 30 of sufficient magnitude. The first and second protrusions 100, 102 would then be released from the first and second openings 90, and the secondary latch 30 could be brought to the open position. Furthermore, at axially-directed forward and axially-directed rearward sides, each of the second protrusions 102 has flat and planar end surfaces 110. The end surfaces 110 preclude and prevent movement in the forward and rearward axial directions of the first and second arms 52, 54 when the first and second protrusions 100, 102 are received in the first and second openings 90 and when the secondary latch 30 is in the closed position. Such movement in the forward and rearward axial directions is often unwanted, and can be inadvertently caused amid initial assembly of the secondary latch 30 at the housing 14 and amid subsequent installation and use. Movement is arrested via surface-to-surface engaging interference between the end surface 110 and the axially-forward wall edge 92 of the first and second openings 90, and between the opposite end surfaces 110 and the axially-rearward wall edge 94.

Still, the first and second protrusions 100, 102 could have differing quantities including a single protrusion on each arm or more than two protrusions on each arm, or only one of the arms and one of the barrier walls could have one or more of the protrusions with the other arm and barrier wall lacking a protrusion, as examples of various embodiments that are possible.

It is to be understood that the foregoing description is not a definition of the invention, but is a description of one or more embodiments. The invention is not limited to the particular embodiment(s) disclosed herein, but rather is defined solely by the claims below. Furthermore, the statements contained in the foregoing description relate to particular embodiments and are not to be construed as limitations on the scope of the invention. Various other embodiments and various changes and modifications to the disclosed embodiment(s) will become apparent to those skilled in the art.

As used in this specification and claims, the terms "for example," "for instance," and "such as," and the verbs "comprising," "having," "including," and their other verb forms, when used in conjunction with a listing of one or more components or other items, are each to be construed as open-ended, meaning that that the listing is not to be considered as excluding other, additional components or items. Other terms are to be construed using their broadest reasonable meaning unless they are used in a context that requires a different interpretation.

## Claims

1. A fluid line quick connector (10), comprising:
a housing (14) having a main passage (22) and a pass-through (24);
a primary latch (28) insertable through said pass-through (24);
a secondary latch (30) locatable adjacent said primary latch (28), said secondary latch (30) having an open position and a closed position;
a data matrix (18);
wherein, when said secondary latch (30) is in the open position, said data matrix (18) is at least partially concealed, and when said secondary latch (30) is in the closed position, the at least partial concealment is absent; **characterized in that** the fluid line quick connector (10)
further comprising a slide (68), said data matrix (18) residing on said slide (68), said primary latch (28) or secondary latch (30) at least partially obstructing said data matrix (18) when said secondary latch (30) is in the open position, the at least partial obstruction absent when said secondary latch (30) is in the closed position.

2. The fluid line quick connector (10) as set forth in claim 1, wherein said slide (68) is prompted to move when said secondary latch (30) is brought to the closed position.

3. The fluid line quick connector (10) as set forth in claim 1, wherein said secondary latch (30) has a ramped surface (82), said ramped surface (82) making abutment with said slide (68) when said secondary latch (30) is brought to the closed position, the abutment urging movement of said slide (68).

4. The fluid line quick connector (10) as set forth in claim 1, said primary latch (28) having a slot (70) for receipt of said slide (68), said slide (68) moving relative to said slot (70) when said secondary latch (30) is brought to the closed position.

## Patentansprüche

1. Fluidleitungsschnellverbinder (10), umfassend:
ein Gehäuse (14) mit einem Hauptdurchgang (22) und einem Durchgang (24);
eine primäre Verriegelung (28), die durch den Durchgang (24) eingeführt werden kann;
eine sekundäre Verriegelung (30), die neben der primären Verriegelung (28) angeordnet werden kann, wobei die sekundäre Verriegelung (30) eine offene Position und eine geschlossene Position aufweist;
eine Datenmatrix (18);
wobei, wenn sich die sekundäre Verriegelung (30) in der offenen Position befindet, die Datenmatrix (18) zumindest teilweise verdeckt ist, und wenn sich die sekundäre Verriegelung (30) in der geschlossenen Position befindet, die zumindest teilweise Verdeckung nicht vorhanden ist; **dadurch gekennzeichnet, dass** der Fluidleitungsschnellverbinder (10)
ferner einen Schieber (68) umfasst, wobei sich die Datenmatrix (18) auf dem Schieber (68) befindet, wobei die primäre Verriegelung (28) oder die sekundäre Verriegelung (30) die Datenmatrix (18) zumindest teilweise bedeckt, wenn sich die sekundäre Verriegelung (30) in der offenen Position befindet, wobei die zumindest teilweise Bedeckung nicht vorhanden ist, wenn sich die sekundäre Verriegelung (30) in der geschlossenen Position befindet.

2. Fluidleitungsschnellverbinder (10) nach Anspruch 1, wobei der Schieber (68) dazu veranlasst wird, sich zu bewegen, wenn die sekundäre Verriegelung (30) in die geschlossene Position gebracht wird.

3. Fluidleitungsschnellverbinder (10) nach Anspruch 1, wobei die sekundäre Verriegelung (30) eine rampenförmige Fläche (82) aufweist, wobei die rampenförmige Fläche (82) an dem Schieber (68) zur Anlage kommt, wenn die sekundäre Verriegelung (30) in die geschlossene Position gebracht wird, wobei die Anlage den Schieber (68) zu einer Bewegung drängt.

4. Fluidleitungsschnellverbinder (10) nach Anspruch 1, wobei die primäre Verriegelung (28) einen Schlitz (70) zur Aufnahme des Schiebers (68) aufweist, wobei sich der Schieber (68) relativ zu dem Schlitz (70) bewegt, wenn die sekundäre Verriegelung (30) in die geschlossene Position gebracht wird.

## Revendications

1. Raccord rapide de conduite de fluide (10), comprenant :
un boîtier (14) ayant un passage principal (22) et un passage traversant (24) ;
un loquet principal (28) pouvant être inséré à travers ledit passage traversant (24) ;
un loquet secondaire (30) pouvant être situé à côté dudit loquet principal (28), ledit loquet secondaire (30) ayant une position ouverte et une position fermée ;
une matrice de données (18) ;
dans lequel, lorsque ledit loquet secondaire (30) est dans la position ouverte, ladite matrice de données (18) est au moins partiellement dissimulée, et lorsque ledit loquet secondaire (30) est dans la position fermée, la dissimulation au moins partielle est absente ; **caractérisé en ce que** le raccord rapide de conduite de fluide (10)
comprend en outre une glissière (68), ladite matrice de données (18) résidant sur ladite glissière (68), ledit loquet principal (28) ou loquet secondaire (30) obstruant au moins partiellement ladite matrice de données (18) lorsque ledit loquet secondaire (30) est dans la position ouverte, l'obstruction au moins partielle étant absente lorsque ledit loquet secondaire (30) est dans la position fermée.

2. Raccord rapide de conduite de fluide (10) selon la revendication 1, dans lequel ladite glissière (68) est amenée à se déplacer lorsque ledit loquet secondaire (30) est amené dans la position fermée.

3. Raccord rapide de conduite de fluide (10) selon la revendication 1, dans lequel ledit loquet secondaire (30) a une surface inclinée (82), ladite surface inclinée (82) étant en butée avec ladite glissière (68) lorsque ledit loquet secondaire (30) est amené dans la position fermée, la butée sollicitant le mouvement de ladite glissière (68).

4. Raccord rapide de conduite de fluide (10) selon la revendication 1, ledit loquet principal (28) ayant une fente (70) pour recevoir ladite glissière (68), ladite glissière (68) se déplaçant par rapport à ladite fente (70) lorsque ledit loquet secondaire (30) est amené dans la position fermée.
